# EUROPEAN PATENT APPLICATION

(11) **EP 1 495 662 A1**
(43) Date of publication of application: **12.01.2005**
(21) Application number: 04254064.1
(22) Date of filing: 07.07.2004
(51) Int. Cl.: A01D 34/66

(54) **Front mounted rotary cutter with folding wings**

(30) Priority: 08.07.2003 CA 2434114
(71) Applicant: Schulte Industries Ltd., Englefeld, Sakatchewan S0K 1N0 (CA)
(72) Inventor: Colistro, Vincent A., Saskatoon Saskatchewan S7H 3B4 (CA)
(74) Representative: Bolinches, Michel Jean-Marie

(57) **Abstract**

A large wing fold rotary cutter is front mounted on (mounted at the leading end of) a tractor and pushed rather than pulled. The cutter has a centre cutter section (16), two wing cutter sections(18) mounted on opposite sides of the centre and wing sections and castor wheels (39, 48) for supporting one end of the centre section. The cutter is connected to leading end of the tractor by a hitch (64) is connected to the trailing end of the centre section. The hitch (64) prevents yaw and roll of the cutter relative to the tractor. The transport castor wheels (39) are mounted on the leading end of the centre section by a wheel suspension (42) including a transverse walking beam (44) thus allowing the transport wheels to move vertically on the centre section. A linkage system (68) couples the hitch (64) and the wheel suspension (42) for lowering and raising the transport wheels relative to the centre section in response to respective raising and lowering of the trailing end of the centre section with the hitch. By attaching the cutter to the leading end of the tractor, the operator needs only to look forward in order to operate the tractor and the rotary cutter. By using folding wings the rotary cutter is capable of a wide cutting width while still folding to a transport width of as little as 2.5 meters. By using a three section deck the rotary cutter is capable of following uneven ground more closely than a single deck rotary cutter of a similar width. The cutter may use relatively large diameter blade sets (larger than 1.2 meters diameter) and an independent drive to each individual blade set, so that the machine is capable of cutting heavier material that would be typical of the rotary cutter class rather than the finishing mower class.

## Description

### FIELD OF INVENTION

The present invention relates to large, wing fold rotary cutters. A rotary cutter is intended to perform a wide variety of cutting tasks ranging from grass cutting to cutting heavy brush. Belt driven blade sets as normally found on finishing mowers are not usually adequate for this type of use.

### BACKGROUND

Large wing fold rotary cutters are conventionally operated in a "rear mount" or pulled configuration, towed by a tractor. In one arrangement, a trailing cutter is pivotally mounted on the drawbar of a towing tractor by means of a draw pin. In another configuration, a rear mount cutter is mounted on the tractor using a three point hitch, which limits the ability of the cutter to follow ground contours.

There are a number of basic problems associated with the operation of conventional trailing or three point hitch mounted rotary cutters. These include:
When the rotary cutter is trailed behind the tractor it is more difficult to make a clean cut since the rotary cutter blades must be capable of lifting and cutting material that has been pushed down by the tractor tires.

The tractor operator must look in both directions in order to operate both the tractor and the rotary cutter. He must look forward in order to set his direction and to watch for obstructions, and he must look rearward in order to confirm that the rotary cutter is operating properly (e.g. not stripping, properly aligned, clutches not slipping). Since the operator can not look forward and rearward at the same time the likelihood that an obstacle will be encountered by the cutter is greater than if all his work is done facing one direction.

These problems may be obviated by a "front mount" rotary cutter mounted at the front of the tractor to be pushed rather than pulled. The state of the art includes front mounted single deck rotary cutters and front mounted wing fold finishing mowers, neither of which provides a solution to the concerns addressed by the present invention.

Problems associated with conventional front mounted single deck rotary cutters include:
The maximum generally accepted transport width for a farm implement is, in Europe, 3 meters and, in North America approximately 3.6 meters. If these transport widths are to be maintained then the maximum operating width of a single deck rotary cutter would be less than 3.6 meters.

A single deck rotary cutter does not follow ground contours effectively. It is suitable mainly for operation on flat terrain.

The various types of front mounted wing fold finishing mowers do not have drive line arrangements, lifting and lowering mechanisms and wing fold mechanisms sufficient to meet the requirements of a wing fold rotary cutter.

### SUMMARY

According to the present invention, there is provided a rotary cutter for cutting vegetation as the cutter advances in a forward direction, the cutter being of the type comprising:
a centre cutter section;
two wing cutter sections pivotally mounted on opposite sides of the centre section;
a centre cutter rotor mounted on the centre section;
a wing cutter rotor mounted on each wing section;
transport castor wheels mounted on the centre section for supporting one end of the centre section;
wing wheels mounted on respective ones of the wings for supporting the wings;
a hitch coupling mounted on the centre section for mounting the cutter on a tractor;
CHARACTERIZED IN THAT:
the transport wheels are mounted on a leading end of the centre section by a wheel suspension assembly allowing the transport wheels to move vertically on the centre section; and
the hitch coupling is mounted on a trailing end of the centre section for mounting the cutter on a hitch at the leading end of the propelling tractor.

The front mount hitch coupling will normally inhibit relative roll and yaw movements of the cutter with respect to the tractor.

The cutter "rotors" are the blade sets used in a conventional rotary cutter or any equivalent rotating cutting assembly.

A rotary cutter according to the invention addresses the problems noted above, in the following ways:
By attaching the cutter to the leading end of the tractor, the rotary cutter is capable of a better quality cut since material is not first pressed down by the tractor tires. "Leading" refers to the direction of motion of the tractor when the cutter is in use and is unrelated to the cab orientation. Thus, with some tractors, for example bidirectional tractors like the New Holland TV 140, the "leading" end is what would appear to many to be the "back" of the tractor.
By attaching the cutter to the leading end of the tractor, the operator needs only to look forward in order to operate the tractor and the rotary cutter.
By using folding wings the rotary cutter is capable of a wide cutting width while still folding to a transport width of as little as 2.5 meters.
By using a three section deck the rotary cutter is capable of following uneven ground terrain more closely than a single deck rotary cutter of a similar width.

The cutter may use relatively large diameter rotors blade sets (larger than 1.2 meters diameter) and an independent drive to each individual blade sets, so that the machine is capable of cutting heavier material that would be typical of the rotary cutter class rather than the finishing mower class.

It is also expected that operator fatigue will be reduced when running a front mounted cutter.

The front mounted rotary cutter does not use a pivoting hitch allowing yaw, or lateral pivoting of the cutter on the tractor, since this would have a tendency to "jackknife" in a pushed cutter configuration. However, a fixed hitch coupling, either a three point hitch or an equivalent to the lower arms of such a hitch prevents a rolling movement of the cutter on the tractor so that the transport wheels of the centre section of the cutter cannot follow ground contours. This is resolved by using a wheel suspension arrangement that allows those wheels to move vertically relative to the centre section of the cutter, while still providing support. In the currently preferred embodiment, this is achieved by mounting the wheels on a transverse oscillating beam, itself mounted on the centre section.

Since the tractor hitch may be used to adjust the height of the trailing end of the cutter, and because it is best to have the cutter level in use, a levelling linkage may be incorporated to adjust the transport wheels on the centre section in response to raising or lowering of the trailing end of the centre section with the hitch, thus keeping the cutter level.

The cutter may have a drive line layout that includes a parallel shaft gearbox in order to deliver driving power to all right angle gearboxes as drives to the blade sets and to allow each right angle gearbox to have an associated independent torque limiter, for example a slip clutch to protect against drive line shock.

### DESCRIPTION OF THE DRAWINGS

In the accompanying drawings which illustrate an exemplary embodiment of the present invention:
Figure 1 is an isometric illustration of a front mounted rotary cutter in lowered or working position;
Figure 2 is an isometric illustration of the cutter in its transport position; and
Figure 3 is a longitudinal cross sectional elevation showing the cutter levelling linkage.

### DETAILED DESCRIPTION

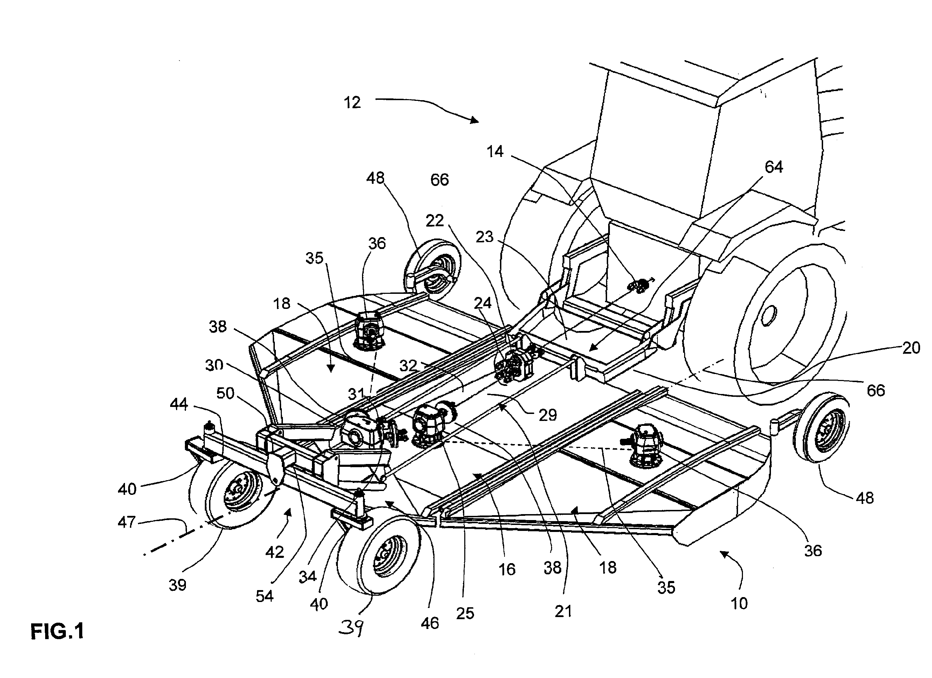

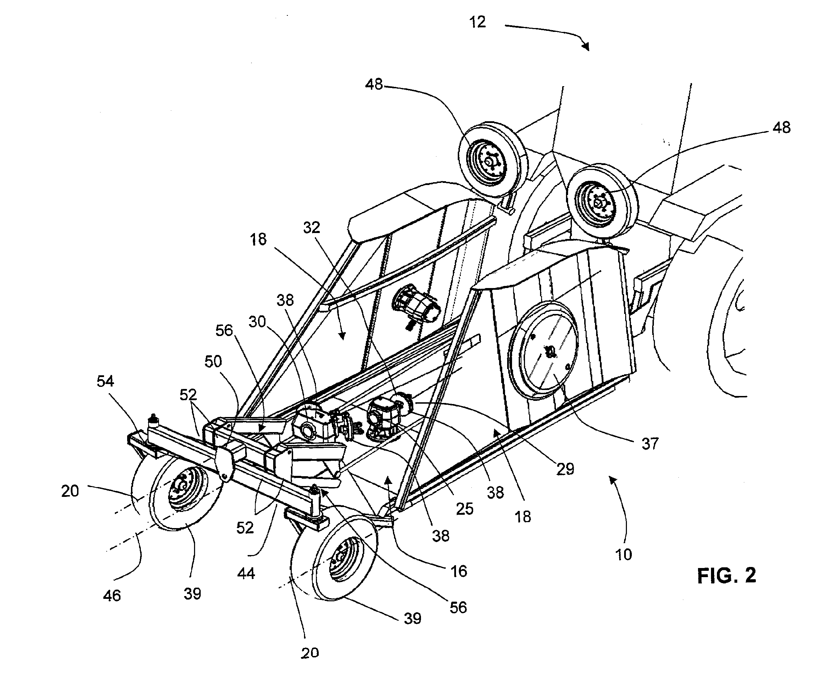

Referring to the accompanying drawings, there is illustrated a rotary cutter 10 propelled by a tractor 12. The cutter is powered from the power take off (PTO) 14 of the tractor. As illustrated in Figures 1 and 2, the cutter has a centre section 16 and two wing sections or "wings" 18, mounted on opposite sides of the centre section to pivot about respective longitudinal axes 20 to follow ground contours and to enable lifting of the wings from the operating position shown in Figure 1 to the transport position shown in Figure 2.

The drive system 21 for driving the cutter includes a parallel shaft divider gearbox 22 mounted on the centre section 16. Gearbox 22 has an input connected to the PTO 14 by a transmission shaft 23 and two, generally parallel outputs 24. Forwardly of the gearbox 22 is a right angle gearbox 25 driving a centre rotor 26 ( also referred to as a "blade set") below the deck 28 of the mower. The gearbox 25 is connected to one output of gearbox 22 by a shaft 29.

Near the leading end of the centre section is a second divider gearbox 30. This gearbox has an input 31 connected to another output of gearbox 22 by a shaft 32. Two outputs 34 of the second divider gearbox are connected to respective right angle gearboxes 36 mounted on the respective wings 18 by shafts 35 to drive respective wing rotors (blade sets) 37. A torque limiting slip clutch 38 is used in each of shafts 29 and 35 to protect against drive line shock.

At the leading end, the centre section of the cutter is supported on two transport wheels 39. Each wheel has a castor mount 40 to align the wheel in the direction of travel. To follow the terrain, the wheels are mounted using a suspension 42. This includes a transverse beam 44 carrying the wheels at its opposite ends and a lift mechanism 46 on which the beam is mounted for oscillating movement about an axis 47 aligned with the direction of travel. The beam 44 thus acts like a transverse walking beam to accommodate travel over irregular ground. At the outside corner of each wing at the trailing end is a castor wheel 48, supporting the wing and allowing it to pivot up and down to follow uneven ground during operation. The lift mechanism 46 includes a frame including a cross member 50 mounted at each end on a pair of plates 52, a hanger 54 projecting forwardly from the centre of the cross beam and mounting the beam 44 on the lift mechanism frame and two laterally spaced parallelogram linkages 56, each including one of the pairs of plates 52 and upper and lower elements 58 and 60 extending rearwardly from the associated pair of plates.

In order to allow the rotary cutter 10 to be pushed by the tractor 12, the cutter is mounted on the leading end 62 of the tractor using a semi-mount type of attachment or hitch 64 with two arms 66 similar to the lower arms of a standard three point hitch. If a three point hitch is used and the arms are structurally inadequate, a special purpose frame may be employed. The height of the trailing end of the cutter may be adjusted using the tractor three point hitch lift system, however this would cause the trailing end to lift independently of the leading end, which is not a useful characteristic since the blade sets must remain parallel to the ground in order to cut effectively. A linkage system 68 connects leading and trailing lift mechanisms in order that the rotary cutter lifts parallel to the ground.

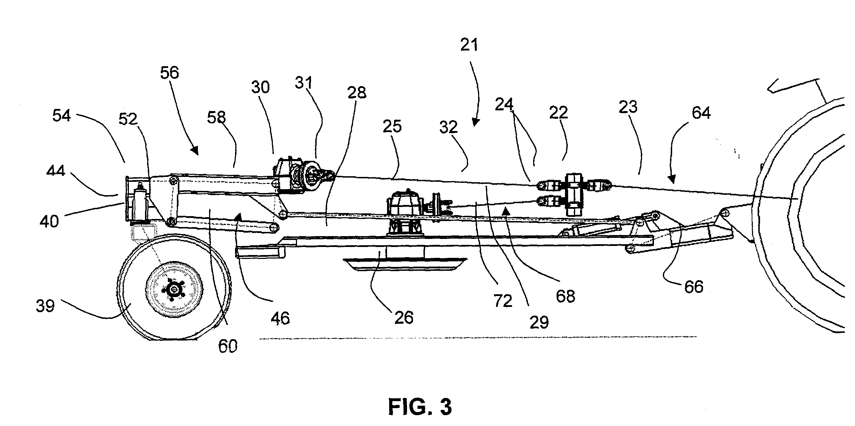

The parallelogram linkages 56 of the leading lift mechanism have arms 70 connected by links 72 to the trailing lift system as shown in Figure 3. The parallelogram linkages of the leading lift mechanism raise and lower the beam 44 to maintain the pivot axes of the transport castor wheels 39 in a vertical orientation while lifting and lowering the cutter. During lifting and lowering operation the attachment arms 66 will remain fixed in position and the parallel link system connecting the leading and trailing lifting mechanisms will cause the rotary cutter to lift parallel to the ground.

Referring to Figures 1 and 2, it will be noted that with the wings raised to the transport position of Figure 2, the wing support castor wheels 48 are folded to positions transverse to the direction of travel to clear the tractor tires and fenders. The cutter may include a wheel rotating mechanism for performing this movement when the rotary cutter wings are raised.

The front mounted rotary cutter with folding wings will have all the performance capabilities of a traditional rotary cutter with the added advantages of cleaner cutting since the tractor is not running over the material to be cut, better visibility and reduced driver fatigue since the operator only needs to look in the direction of travel, and greater manoeuvrability in tight spots since the cutter is not pivotally mounted to the tractor as is the case with a drawbar mounted trailing unit.

While one embodiment of the present invention has been described in the foregoing, it is to be understood that other embodiments are possible within the scope of the invention. Thus, while specific reference has been made to mounting the rotary cutter on the tractor by means of the lower arms of a standard three point hitch, any other device having a similar function may be employed.

## Claims

**1.** A rotary cutter (10) for cutting vegetation as the cutter advances in a forward direction, the cutter being of the type comprising:
a centre cutter section (16);
two wing cutter sections(18) pivotally mounted on opposite sides of the centre section;
a centre rotor (26) mounted on the centre section;
a wing rotor (37) mounted on each wing section;
transport castor wheels (39) mounted on the centre section for supporting one end of the centre section;
wing wheels(48) mounted on respective ones of the wings for supporting the wings;
a hitch (64) on the centre section for mounting the cutter on a tractor;
**CHARACTERIZED IN THAT**:
the transport wheels (39) are mounted on a leading end of the centre section by a wheel suspension (42) allowing the transport wheels to move vertically on the centre section and
the hitch (64) is mounted on the trailing end of the centre section for mounting the cutter on the leading end of the propelling tractor.

**2.** A cutter according to Claim 1 wherein the wing wheels (48) are castor wheels.

**3.** A cutter according to Claim 1 or 2 wherein the hitch (64) prevents roll and yaw of the cutter relative to the tractor.

**4.** A cutter according to Claim 1, 2 or 3 including a linkage system (68) coupling the hitch (64) and the wheel suspension (42) for lowering and raising the transport wheels relative to the centre section in response to respective raising and lowering of the rear end of the centre section with the hitch.

**5.** A cutter according to any preceding Claim wherein the wheel suspension (42) includes a transverse walking beam (44).

**6.** A rotary cutter according to any preceding Claim including a drive system (21) for driving the cutter rotors, the drive system including:
a first divider gear box (22) with an input (23) and two substantially parallel outputs (24); and
power transmitting means (29, 30, 32, 35, 36) connecting the outputs to the rotors.

**7.** A cutter according to Claim 6 wherein:
the power transmitting means include:
a second divider gear box (30) with an input (31) coupled to one output of the first divider gear box (22) and two outputs (34) connected to respective ones of the wing rotors (37); and
a first drive shaft (29) connecting one output of the first divider gear box (22) to the centre rotor (26);
a second drive shaft (32) connecting the second output of the first divider gear box (22) to the input (31) of the second divider gear box (30); and
two third drive shafts (35) connecting the respective outputs of the second divider gear box to the respective wing rotors.

**8.** A cutter according to Claim 7 including a torque limiter (38) in each of the first and third shafts (29, 35).

**9.** A cutter according to Claim 8 wherein each torque limiter is a slip clutch (38).

**8.** A cutter according to any preceding claim including a wing lift for raising the wings to respective transport positions upstanding from the centre section.

**9.** A cutter according to Claim 8 including wing wheel rotating means for pivoting the wing wheels to transport positions transverse to the forward direction.
